# EUROPÄISCHE PATENTANMELDUNG

(11) **EP 2 088 419 A2**
(43) Veröffentlichungstag der Anmeldung: **12.08.2009**
(21) Anmeldenummer: 09001723.7
(22) Anmeldetag: 06.02.2009
(51) Int. Cl.: G01N 3/20

(54) **Vorrichtung und Verfahren zur Detektion von Defekten von mono- oder polykristalinen Siliziumscheiben**

(30) Priorität: 07.02.2008 DE 102008008276
(71) Anmelder: SOLARWATT AG, 01109 Dresden (DE)
(72) Erfinder: Weidhase, Frieder, Prof. Dr., 01326 Dresden (DE); Schlegel, Lothar, Dipl.-Ing., 01445 Radebeul (DE); Weidhase, Lutz, 01326 Dresden (DE); Bretschneider, Dietmar, 01237 Dresden (DE)
(74) Vertreter: Drechsler, Gottfried

(57) **Zusammenfassung**

Die Erfindung betrifft eine Vorrichtung und ein Verfahren zur Detektion von Defekten in mono- und palykristallinen Siliziumscheiben zur mehrachsigen uni- und/oder bidirektionalen Biegebeanspruchung und die Auswertung ermittelter Messdaten zur Selektion der Siliziumscheiben 1.

Aufgabe ist es, eine neuartige Vorrichtung und ein neues Verfahren zu schaffen, wobei gegenüber früheren Verfahren die Empfindlichkeit wesentlich verbessert und die Auswertung ermittelter Messdaten aus einer oder mehreren Biegebeanspruchungen zur Selektion der Siliziumscheiben genutzt werden soll.

Die zu prüfende Siliziumscheibe 1 wird zwischen mindestens einem Stößel 9 und festen und/oder beweglichen Widerlagern 10 und/oder mindestens einem Stößelpaar 9Aᵤ und 9Aₒ und gehalten. Dabei wird die Siliziumscheibe durch unterschiedliche Ansteuerung einer oder mehrerer Krafterzeugungseinrichtungen 2 mechanisch uni- und/oder bidirektional verformt (Twisten).

Eine Ansteuerelektronik 7 steuert die Stößel 9 der Krafterzeugungseinrichtungen 2 unter Nutzung von rechentechnischen Komponenten 5 mittels implementierter programmtechnischer Komponenten 6. Die Steuergröße der Ansteuerelektronik 7 wird dabei verfahrensgemäß in Relation zu den über die Wegmesseinrichtung 4 ermittelten Durchbiegungsverlauf in real-time aufzeichnet. Erfindungsgemäß werden die Abweichungen zwischen einer ersten Messung und mindestens einer weiteren Messung und/oder einem signifikanten Durchbiegungsverlauf als Abbruchkriterium überwacht, ausgewertet und detektiert.

Die Erfindung ist in der Serienfertigung von plattenförmigen Solarmodulen zur Qualitätsprüfung und Selektion jeder einzelnen mono- oder polykristallinen Siliziumscheibe anwendbar.

## Beschreibung

Die Erfindung betrifft eine Vorrichtung und ein Verfahren zur Detektion von Defekten in mono- und polykristallinen Siliziumscheiben, insbesondere in Solarzellen oder Siliziumwafern, unter Nutzung mindestens einer steuerbaren Krafterzeugungseinrichtung und der Auflage der Siliziumscheibe 1 auf Halter, zur mehrachsigen uni- und/oder bidirektionalen Biegebeanspruchung und die Auswertung der ermittelten Messdaten zur Selektion der Siliziumscheiben 1.

Es sind eine Reihe unterschiedlicher Vorrichtungen und Verfahren zur Detektion von Defekten in Solarzellen und Siliziumwafern bekannt. So sind verschiedene Möglichkeiten beschrieben, um Risse, Spalten und ähnliche Defekte bei Halbleiterscheiben erkennen und auswerten zu können. Unter anderem sind Verfahren bekannt, die zerstörungsfrei mit kristallografischen, thermographischen, thermo-mechanischen, bildanalytischen, spektrometrischen, strahlungs-technischen, Schallemission nutzenden, Dauerschwingverhalten untersuchenden und Ultraschall nutzenden Prüfmethoden arbeiten. Nachteilig bei allen diesen Verfahren und den zugehörigen Prüfvorrichtungen sind deren hoher gerätetechnische Aufwand und die nicht hinreichend eindeutig reproduzierbare Fehlererkennung. Insbesondere ist deren Einsatz in der industriellen Serienfertigung ungeeignet.

So ist zum Beispiel in der DE 101 01 203 A1 ein Verfahren zum Erfassen und Klassifizieren von Kratzern auf Halbleiterwafern beschrieben. Dabei wird auf dem Wafer ein Koordinatensystem aufgesetzt und definiert und dann die Verteilung der Fehlerzellen ermittelt. Aus der Verteilung der Fehlerzellen ergeben sich die Art und der Grad der Schädigung der geprüften Solarzellen.

Da Kratzer auf Wafern vor allem bei immer geringer werdenden Schichtdicken als Ausgang von möglichen Rissbildungen gefährlich sind, ist in der DE 198 40 432 A1 eine technische Lösung beschrieben, bei der die Kratzer mittels einer strukturanalytischen Methode mit Hilfe einer speziellen spektroskopischen Methode ermittelt und ausgewertet werden können.

Es ist des Weiteren aus der DE 198 22 360 A1 eine Vorrichtung und ein Verfahren bekannt, wobei die energetische Lage und Breite von vorliegenden Defekten durch Messung der Bandverbiegung in Abhängigkeit von der Lichtintensität und/oder Temperatur ermittelt wird.

In einer anderen technischen Lösung zur Fehlersuche von Rissen gemäß der DE 199 41 135 A1 wird die Siliziumscheibe einem Hochfrequenz-Magnetfeld ausgesetzt und der Wirbelstrom im Halbleitermaterial kontaktlos ausgelesen. Die Ladungsträger werden dabei mit Licht freigesetzt.

Aus der DE 197 23 080 A1 ist es auch bekannt, Kristallrisse mit Hilfe mehrerer hintereinander folgenden elektrischer Impulse festzustellen, wobei die Änderung der thermischen Widerstände ausgewertet und zur Fehlerermittlung herangezogen wird.

Nach der DE 100 41 118 A1 wird die Wafer-Oberfläche mit Licht unter einem bestimmten Einfallswinkel abgerastert und das unter einem vorgegebenen Winkel reflektierte Licht zur Signalerzeugung für die Suche nach Kratzern verwendet.

All diese Verfahren sind zwar geeignet, eine Vielzahl von verschiedenen Defekten zu erfassen und abzubilden. Für eine Untersuchung der bruch-mechanischen Eigenschaften von Siliziumscheiben unter den Belastungen eines automatisierten Fertigungsprozesses sind diese aber zu zeitaufwändig, zu wenig reproduzierbar oder nur mit hohem Aufwand realisierbar.

Aus der DE 103 39 519 A1 14 115 ist ein Verfahren und eine Vorrichtung zur Prüfung der Biegefestigkeit von Solarzellen im Fertigungsprozess bekannt, bei dem die Solarzellen bei der Prüfung den gleichen Biegebeanspruchungen wie im Fertigungsprozess der Solarmodule, sowie bei der Betriebsbelastung unterzogen werden. Dabei wird die Größe der Impedanzänderung der Zellen bei unterschiedlichen Biegebeanspruchungen, Messfrequenzen und fehlender Bestrahlung als Parameter für ausreichende Biegbeanspruchung gemessen und ausgewertet. Es erfolgt eine Reihe von unterschiedlichen Annahmen und es werden die Solarzellen während der Impedanzmessung und der Biegebeanspruchung zusätzlich mit einer Dichte-Schwingung beaufschlagt. Als Ergebnis werden die Impedanz-Änderungen als Funktion der Biegebeanspruchung, der SchwingungsAmplitude, der akustischen Frequenz sowie der Messfrequenz dargestellt. Die Spannung und/oder der Strom der Solarzellen wird als Funktion unterschiedlicher Biegebeanspruchungen und Bestrahlungen gemessen und einer Auswerteeinrichtung zugeführt, die während der Belastung emittierten akustischen Signale werden mit einem Sensor aufgenommen und ebenfalls der Auswerteeinrichtung zugeführt. Diese technische Lösung ist sowohl konstruktiv als auch gerätetechnisch sehr aufwändig ausgeführt.

In der Dissertation der Universität Konstanz mit dem Titel " Charakterisierungsverfahren und industriekompatible Herstellungsprozesse für dünne multikristalline Siliziumsolarzellen" von Dr. Andreas Schneider vom 16.02.2004 wird auf den Seiten 29 bis 32 unter anderem ausführlich auf das sogenannte Twisten von Solarzellen eingegangen. Dabei werden die Solarzellen in allen Stadien des gesamten Fertigungsprozesses in einer bestimmten Art und Weise mechanisch verbogen und ausführlichen Bruchtests unterzogen. Es wir gezeigt, inwieweit sich die Twist-Test-Methode eignet, geschädigte Wafer rechtzeitig auszusortieren. Dieses so genannte Twisten unter Einwirkung einer definierten Kraft bei Messung der Biegung ist bereits seit 1984/1985 als Testmethode für Solarzellen bekannt. In entsprechenden Schriften, wie z.B.
C. P. Chen, M. H. Leipold (1985) Stress Rate and Proof-Testing of Silicon Wafers Journal of the American Ceramic Society 68 (2), C-54-C-55.
doi:10.1111/j.1151-2916.1985.tb15283.x,
wird genau auf das mechanische Verbiegen eingegangen und es werden jeweils verschiedene Solarzellen einer Herstellungsserie jeweils einem mechanischen Biegeprozess unterzogen.

In JP 2003270109 A vom 25.09.2003 wird eine Durchbiegung mit Hilfe des Auflegens eines Gewichtes oder der Einwirkung von Luftdruck bzw. Öldruck ("flüssiger Druck") erzeugt. Setzt eine Siliziumscheibe der der auf o.g. Weise erzeugten Biegekraft eine zu geringe Gegenkraft entgegen, erfolgt eine so große Durchbiegung, dass Führungs-Anschläge berührt werden, was einer "Schlecht-Aussage" entspricht. Allerdings erfolgt hier nur eine digitale Gut-/Schlecht-Aussage. Vorkehrungen gegen ein Brechen der Siliziumscheibe fehlen, so dass eine Zerstörung der Siliziumscheibe in Kauf genommen wird.

Die naheliegende technische Lösung DE 10 2006 026 528 A1 beinhaltet eine Vorrichtung und ein automatisierbares Verfahren zum Prüfen von Siliziumscheiben mit hoher Zuverlässigkeit. Dieses Verfahren nutzt ebenfalls das an sich bekannte Twisten auf rein mechanischer Basis. Die entsprechende mechanische Vorrichtung ist konstruktiv aufwendig. Auf Grund der erforderlichen Kraftmessung ist die Messaussage bei dünnen Siliziumscheiben begrenzt bzw. ungenau.

Aufgabe der Erfindung ist es, eine neuartige, leicht automatisierbare, in eine Serienfertigung integrierbare und konstruktiv einfache Vorrichtung und ein zugehöriges Verfahren zur Detektion von Defekten in mono- oder polykristallinen Siliziumscheiben unterschiedlicher Formen und Abmessungen, insbesondere von Solarzellen oder Siliziumwafern mittels Biegebeanspruchung zu schaffen, wobei gegenüber früheren Verfahren die Empfindlichkeit wesentlich verbessert und die Auswertung der ermittelten Messdaten aus einer oder mehreren Biegebeanspruchungen zur Selektion der Siliziumscheiben genutzt werden soll, das Verfahren einen sehr kurzen Detektionszyklus ermöglicht und eine hochgenaue Defekterkennung gewährleistet wird.

Die Aufgabe wird erfindungsgemäß durch die Merkmale des ersten und zweiten Patentanspruchs gelöst. Weitere zweckmäßige Ausgestaltungen der Erfindung sind Gegenstand der weiteren rückbezüglichen Unteransprüche. Die erfindungsgemäße Vorrichtung und das zugehörige Verfahren zur Detektion von Defekten von mono- oder polykristallinen Siliziumscheiben 1, insbesondere von Solarzellen oder Siliziumwafern arbeitet unter Nutzung mindestens zweier steuerbarer Krafterzeugungseinrichtungen 2. Diese Krafterzeugungseinrichtungen 2 sind so angeordnet, dass diese auf die in die Vorrichtung eingelegte und fixierte Siliziumscheibe 1 eine uni- oder bidirektionalen Biegebeanspruchung ausüben kann, wobei die Biegebeanspruchung wahlweise in Richtung mehrerer verschiedene Achsen initiiert werden kann.

Der wesentliche Lösungsansatz der vorliegenden erfindungsgemäßen Anordnung und des zugehörigen Verfahrens besteht in der Elimination einer an sich aus dem Stand der Technik bekannten, weniger genau realisierbaren Kraftmessung durch eine wesentlich exakter realisierbare Wegmessung, wobei hierfür im Gegensatz zu bekannten Lösungen statt einer definierten Wegeinprägung eine steuerbare Krafteinwirkung genutzt wird. Die steuerbare Krafteinwirkung kann unter Nutzung physikalischer Gesetze mit der Genauigkeit der hinreichend gut realisierbaren Steuersignalerzeugung erfolgen. Auf diese Weise wird gegenüber bislang bekannten Verfahren die Messgenauigkeit wesentlich erhöht.

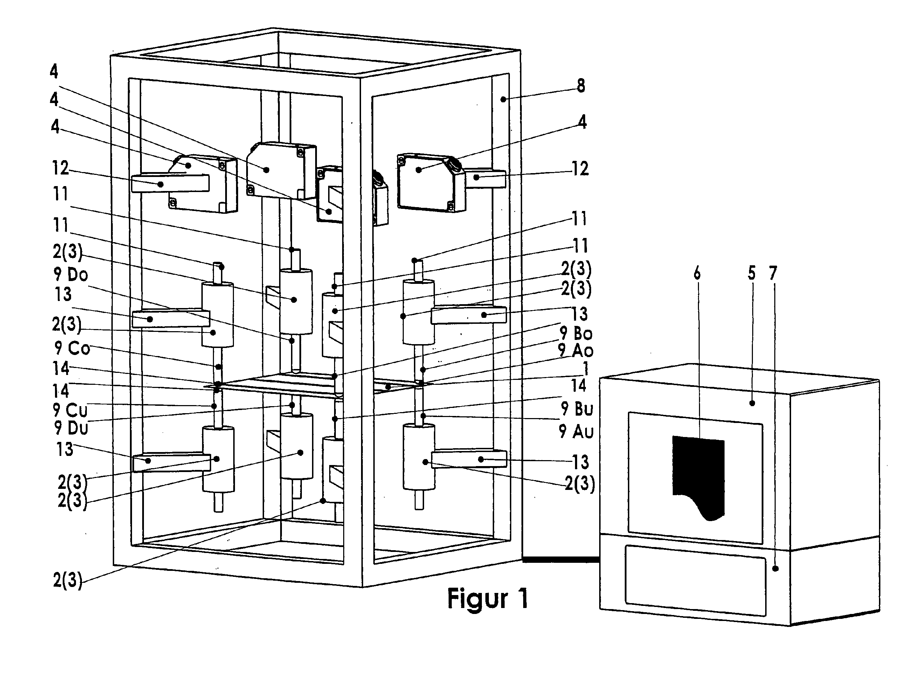

Die erfindungsgemäße Vorrichtung soll an Hand der Figuren 1 bis 5 in verschiedenen Ausführungen näher erläutert werden. Figur 1 zeigt den schematischen Aufbau einer erfindungsgemäßen Vorrichtung zum Prüfen von mono- oder polykristallinen Siliziumscheiben 1, mit der das erfindungsgemäße Verfahren besonders vorteilhaft realisiert werden kann. Dabei ist im und zum Grundgestell 8 hin eine nicht gezeichnete Zuführung von Siliziumscheiben 1 üblicher Ausführung, z. B. ein Greiferarm oder eine Bandzuführung angeordnet. Das bedeutet, dass die erfindungsgemäße Vorrichtung zur Detektion von Defekten in die Serienfertigung voll integrierbar ausgebildet ist und jede Siliziumscheibe einzeln einer Prüfung unterzogen wird, bevor diese z. B. als Solarzelle in ein aus vielen untereinander verschalteten Solarzellen bestehendes plattenförmiges Solarmodul montiert wird. Gleichfalls ist als rechentechnische Komponente, d.h. als eine oder mehrere speicherprogrammierbare Steuerungen (SPS) 5 bevorzugt ein Mikrorechner 5 zum Speichern und Auswerten der ermittelten Daten in die erfindungsgemäße Vorrichtung integriert und mit den einzelnen Geräten verbunden. Im Mikrorechner 5 sind dabei alle programmtechnischen Komponenten 6 implementiert, die den gesamten Detektionsprozess steuern, überwachen und auswerten. Neben dem Mikrorechner 5 ist auch eine Ansteuerelektronik 7 zur Steuersignaleinspeisung in die Krafterzeugungseinrichtungen 2 angeordnet. Im Ausführungsbeispiel wird zur Steuersignalerzeugung ein herkömmlicher Digital-Analog-Konverter mit 14 Bit Auflösung genutzt. Die Krafterzeugungseinrichtungen 2, die Wegmesseinrichtungen 4 und die Ansteuerelektronik 7 sind jeweils mit dem Mikrorechner 5 verschalten. Die Verschaltung ist zeichnerisch nicht dargestellt, da sie im Inneren des Grundgestells 8 und der einzelnen Geräte verläuft. Am Grundgestell 8 sind hier in der Figur 1 acht steuerbare Krafterzeugungseinrichtungen 2 mit je einem Stößel 9 mittels Befestigungsarmen 13 so befestigt, dass vier steuerbare Krafterzeugungseinrichtungen 2 unterhalb der zu prüfenden Siliziumscheibe 1 und vier steuerbare Krafterzeugungseinrichtungen 2 oberhalb der zu prüfenden Siliziumscheibe 1 verteilt angeordnet sind. Zur Krafterzeugung werden hier jeweils acht Tauchspulen mit linear beweglichen Stößeln 9 eingesetzt, wobei die durch die Tauchspulen über die linear beweglichen Stößel 9 erzeugte Kraft in erster Näherung bekanntermaßen proportional zum eingeprägten Strom steht. Diese unteren und oberen Krafterzeugungseinrichtungen 2 liegen sich in der Anordnung jeweils symmetrisch gegenüber, so dass die einzelnen linear beweglichen Stößel 9 jeweils vier Stößelpaare (9Aₒ/9Aᵤ, 9Bₒ/9Bᵤ, 9Cₒ/9Cᵤ, 9Dₒ/9Dᵤ) bilden. Die Verteilung der Stößelpaare (9Aₒ/9Aᵤ, 9Bₒ/9Bᵤ, 9Cₒ/9Cᵤ, 9Dₒ/9Dᵤ) erfolgt bevorzug so, dass die linear beweglichen Stößel 9 mit den Stößelköpfen 14 jeweils in den vier Ecken der zu prüfenden Siliziumscheibe 1 auf der Oberfläche einer viereckigen Siliziumscheibe 1 aufliegen. Die vier Stößelpaare (9Aₒ/9Aᵤ, 9Bₒ/9Bᵤ, 9Cₒ/9Cᵤ, 9Dₒ/9Dᵤ) von jeweils oben und unten gegenüberliegenden Krafterzeugungseinrichtungen 2 nehmen die Siliziumscheibe 1 mit ihren Stößeln (9Aₒ/9Aᵤ, 9Bₒ/9Bᵤ, 9Cₒ/9Cᵤ, 9Dₒ/9Dᵤ) auf und halten die Siliziumscheibe 1 mit definierten einander entgegen gerichteten Kräften in der Prüfposition. Das heißt, die kraftübertragenden linear beweglichen Stößel 9 fungieren hier auch als Halter 3 für die zu prüfende Siliziumscheibe 1. Die definiert gegeneinander gerichteten Kräfte, die die einzelnen linear beweglichen Stößel 9 der Stößelpaare zur Positionierung der Siliziumscheibe 1 benötigen, werden mittels der sich gegenüber liegenden paarweise angeordneten steuerbaren Krafterzeugungseinrichtungen 2, hier Tauchspulen, erzeugt, welche über die im Mikrorechner 5 implementierten programmtechnischen Komponenten 6 die einzelnen Steuergrößen der Ansteuerelektronik 7 bereitstellt, die die einzelnen Tauchspulen voneinander unabhängig, paarweise oder auch gruppiert steuert. Jeweils am Ende der oberen linear beweglichen Stößel (9Aₒ, 9Bₒ, 9Cₒ, 9Dₒ) sind planparallele Messflächen 11 aus diffus reflektierendem Material angebracht. Zur Wegmessung sind am Grundgestell 8 über Befestigungsstege der Wegmesseinrichtungen 12 jeweils pro Messfläche 11 je eine Laserwegmesseinrichtung 4 befestigt. Hier sind im vorliegenden Ausführungsbeispiel gemäß Figur 1 deshalb vier hochgenaue Laserwegmesseinrichtungen 4 angeordnet. Der Laserstrahl jeder Laserwegmesseinrichtung 4 ist auf je eine zugehörige Messfläche 11 der oberen linear beweglichen Stößel (9Aₒ, 9Bₒ, 9Cₒ, 9Dₒ) ausgerichtet. Durch diese Anordnung ist eine hoch präzise Wegmessung an jedem einzelnen oberen linear beweglichen Stößel (9Aₒ, 9Bₒ, 9Cₒ, 9Dₒ) zu jedem beliebigen Zeitpunkt möglich. Dadurch können die minimalen, im Mikrometerbereich liegenden, Messgrenzen der Laserwegmesseinrichtung 4 zur Auswertung der zurückgelegten Wegänderung herangezogen werden.

Zur Automatisation des Prüfprozesses und zur Gewährleistung der Qualität wird beim Einbringen einer neuen Charge von Siliziumscheiben der zur Defektdetektion optimal geeignete Parametersatz dadurch ausgewählt, dass das Gewicht und/oder die Dicke der jeweiligen Siliziumscheibe 1 mit der Vorrichtung nach Anspruch 1 ermittelt wird und in Abhängigkeit vom Gewicht und/oder der Dicke unterschiedliche bereits vorher hinterlegte oder jeweils aktuell ermittelte Messprofile d.h. Parametersätze und/oder Referenzkurven durch die rechentechnischen Komponenten 6, d.h. den programmierten Mikrorechner 5 gewählt werden. In einem Realisierungsbeispiel nach Anspruch 1 gemäß Figur 1 mit Bandzuführung wird das Gewicht ermittelt, indem in einer ersten Phase, wie in Anspruch 7 ausgeführt, die linear beweglichen Stößel der steuerbaren Krafterzeugungseinrichtungen 2 ohne Siliziumscheibe 1 mit stromlosen oberen Tauchspulen bis zum Ende des Verfahrweges herabgelassen werden. In einer zweiten Phase wird unter Beobachtung des Laserwegmessers die Krafteinwirkung erhöht. Das Erreichen des Kräftegleichgewichts zwischen der gesteuerten Krafterzeugung und der Erdanziehung aufeinanderliegenden linear beweglichen Stößel 9 wird durch Einsatz einer Wegänderung an der Messanordnung (4) angezeigt (erster Messpunkt). In einer dritten Phase werden die oberen linear beweglichen Stößel 9Aₒ, 9Bₒ, 9Cₒ, 9Dₒ angehoben, um die Siliziumscheibe 1 in Phase 4 einlegen zu können. Phase 5 beinhaltet die abermalige Absenkung der oberen linear beweglichen Stößel bis zum Ende des Verfahrweges. In Phase 6 werden analog zu Phase 2 die unteren linear beweglichen Stößel 9 unter Beobachtung des Laserwegmessers einer Erhöhung der Krafteinwirkung unterzogen. Das Erreichen des nunmehrigen Kräftegleichgewichts wird durch Einsatz einer Wegänderung an der Messanordnung 4 angezeigt. Das Gewicht lässt sich jetzt über die Differenz des ersten Messpunktes zum Zweiten ermitteln.

Das Messbereichsende ermittelt sich als dritter Punkt beim Anfahren des oberen Anschlages der oberen Stößel 9Aₒ, 9Bₒ, 9Cₒ, 9Dₒ.

Sinnvollerweise erfolgt dabei eine Mittelwertbildung der Wegmesswerte der einzelnen vier oberen linear beweglichen Stößel 9Aₒ, 9Bₒ, 9Cₒ, 9Dₒ. Der erste Eichpunkt der linear beweglichen Stößelpaare 9Aₒ/9Aᵤ, 9Bₒ/9Bᵤ, 9Cₒ/9Cᵤ, 9Dₒ/9Dᵤ kann nach der Gewichts- bzw. Dickenbestimmung als Nullpunkt für die folgenden Messungen benutzt werden. Der zweite Eichpunkt dient der Bestimmung des Anstieges der Messgeraden. Der dritte Eichpunkt gibt den Endpunkt der Messskala an. Da aber eine Gerade begrenzter Länge bereits mit zwei Punkten vorständig beschrieben ist, kann der dritte Eichpunkt zur Plausibilitätsüberprüfung der Selbstkalibration genutzt werden. Alternativ ist es möglich, bei drei vorhandenen Eichpunkten auf mathematischem Wege (Chie-Quadrat-Verfahren) eine verbesserte Approximation der Kalibrationskurve zu erreichen.

Die Dicke der Siliziumscheibe 1 wird ermittelt, indem in einer ersten Phase alle Stößel ohne Einlage einer Siliziumscheibe 1 herabgelassen werden und dabei ein unterer Punkt bestimmt an der Messfläche der oberen Stößel ermittelt wird. In einer zweiten Phase wird ein analoger zweiter Punkt bei eingelegter Siliziumscheibe bestimmt. Die Differenz von erstem zu zweitem Punkt entspricht der Dicke der Siliziumscheibe.

Es ist sinnvoll bei Häufungen von Fehlererkennungen Messvorgänge zu wiederholen bzw. eine weitere Selbstkalibration durchzuführen.

In Abhängigkeit vom ermittelten Gewicht und oder Dicke der Siliziumscheibe werden unterschiedliche Messprofile d.h. Parametersätze und/oder Referenzkurven gewählt, indem die rechentechnischen Komponenten 5 in Verbindung mit implementierten programmtechnischen Komponenten 6 die optimale Ansteuerung der Krafterzeugungseinrichtung 2 bestimmt. Dadurch ist es möglich, schnell auf Änderungen des Herstellers in der Beschaffenheit der Siliziumscheiben einzugehen. Außerdem wird durch die planmäßige Bereitstellung verifizierter Parametersätze vermieden, dass ungeeignete Parametersätze zur Zerstörung von Siliziumscheiben beitragen.

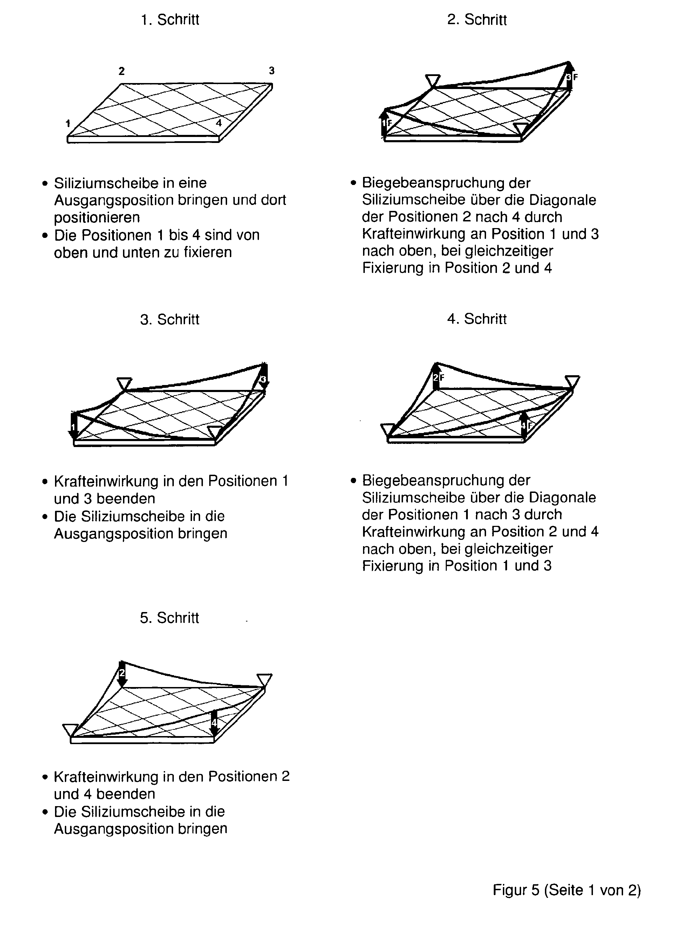

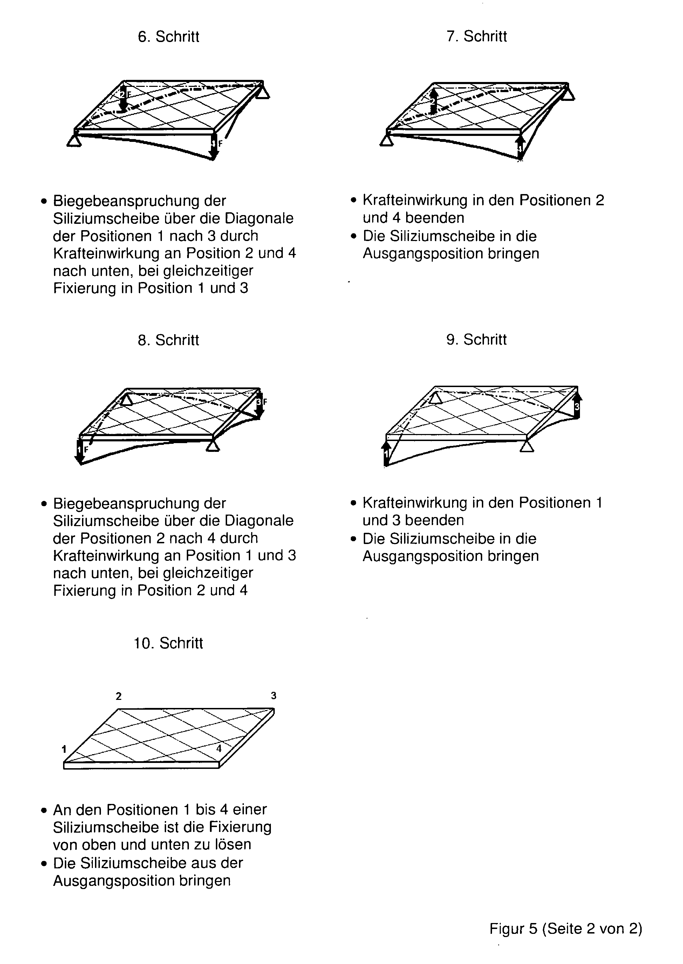

Der Biegevorgang der Siliziumscheibe 1 erfolgt, indem die Krafterzeugungseinrichtungen 2 mittels der vier Stößelpaare 9Aₒ/9Aᵤ, 9Bₒ/9Bᵤ, 9Cₒ/9Cᵤ, 9Dₒ/9Dᵤ unterschiedliche Kräfte an ihren Widerlagern auf die Siliziumscheibe 1 gesteuert von einem Mikrorechner 5, initiiert durch auf dem Mikrorechner vorher implementierten programmtechnischen Komponenten 6 geregelt über die Ansteuerelektronik 7 einwirken lassen. Der hierfür implementierte Zyklus des an sich bekannten Twistens ist unter den Gegebenheiten einer Vorrichtung nach Anspruch 1 in Figur 5 als Sequenz in neun Schritten dargestellt.

Die Zunahme der Krafteinwirkung kann wahlweise als stetige, diskontinuierliche oder dynamische Bewegung erfolgen. Durch die Krafteinwirkung wird die zu prüfende Siliziumschreibe 1 entsprechend Figur 5 gebogen. Dabei legen die Stößel 9 vertikale Wege zurück. Der Verlauf dieser Vertikalbewegung wird mit den vier hochgenauen Laserwegmesseinrichtungen 4 für jedes Stößelpaar 9Aₒ/9Aᵤ, 9Bₒ/9Bᵤ, 9Cₒ/9Cᵤ, 9Dₒ/9Dᵤ getrennt erfasst und in dem Mikrorechner 5 aufgezeichnet. Durch die erfindungsgemäße Vorrichtung unter Nutzung des erfindungsgemäßen Verfahrens ist es möglich, den Wegverlauf an Hand der einzelnen Wegmesswerte sehr genau aufzuzeichnen. Mit dieser neuartigen Ausführung der erfindungsgemäßen Vorrichtung sind verschiedenste Biegeverläufe frei wählbar. Das heißt, dass bekannte sogenannte Twisten (Durchbiegen über eine Diagonale) kann hier aufeinanderfolgend über verschiedenen Diagonalen oder Durchbiegen in verschiedene Richtungen d. h.- einmal nach oben und einmal nach unten ausgeführt werden. Gleichfalls ist es des Weiteren erstmals möglich, jede Ecke der Siliziumscheibe einzeln oder auch alle vier Ecken konkret vorher festgelegten gesteuerten Biegeverläufen zu unterwerfen. Durch diese universellen Kombinationsmöglichkeiten verschiedener Durchbiegungen steigt die Erkennbarkeit von Defekten gegenüber bislang bekannten Vorrichtungen und Verfahren wesentlich an. Zudem kann hier mit geringeren Durchbiegungen gearbeitet werden, als es bisher bekannt ist, wo in der Regel ein einmaliges Durchbiegen bis nahe an die Bruchgrenze der Siliziumscheibe heran erforderlich ist. Dadurch erfolgt keine weitere Schädigung der zu prüfenden Siliziumscheibe.

Während der Aufzeichnung der einzelnen Wegmesswerte verfolgen programmtechnische Komponenten 6 den Verlauf der Durchbiegung in Echtzeit (real time). Sobald im einfachsten Fall der Durchbiegungsverlauf in der real-time-Auswertung bei sukzessiver Addition der Messwerte (integrierter Biegeverlauf) eine signifikante Abweichung von der prognostizierten Vorhersage des nächsten Messpunktes erkennen lässt, wird die weitere Kraftanwendung abgebrochen. Hierdurch wird bereits zu diesem frühen Zeitpunkt die Detektion eines vorliegenden Defektes in der zu prüfenden mono- und polykristallinen Siliziumscheibe 1 möglich.

Zur genaueren Bestimmung der durch die Messpunkte bestimmten Fläche kann z.B. eine mathematische Näherung nach dem Chi-Quadrat-Verfahren benutzt werden. In diesem Fall geben die Messwerte Stützstellen der sukzessiven Integration (integrierter Biegeverlauf).

Ist eine solche signifikante Abweichung während des Durchbiegungsverlaufs nicht in der ersten Durchbiegung erkennbar, endet die stetige oder diskontinuierliche Zunahme der Kraftweinwirkung an einem in den programmtechnischen Komponenten 6 definierten Wert, der durch einen typspezifischen Parametersatz ( Profil) bestimmt wird, welcher durch vorherige Versuche empirisch bestimmt worden ist und in der rechentechnischen Komponente 5 vorher gespeichert wurde bzw. per Bildschirmabfrage ausgewählt wird.

Mittels der rechentechnischen Komponenten 5, und den darauf implementierten programmtechnischen Komponenten 6 und/oder der Ansteuerelektronik 7 erfolgt eine Kompensation sekundärer Effekte forciert, indem die Stellgröße der Krafterzeugungseinrichtung 2 (hier im Ausführungsbeispiel 1 jeweils der Tauchspulen) nach einer abfallenden bzw. ansteigenden e-Funktion mit der Zeitkonstante τ = R * C angesteuert wird, wobei sich τ in erster Näherung aus der Induktivität der krafterzeugenden Einrichtung L und deren ohmschen Widerstand R nach τ = L / R ergibt.

Sofern keine Beendigung bzw. Abbruch der stetigen oder diskontinuierlichen Zunahme der Krafteinwirkung nach den zuvor beschrieben signifikanten Abbruchkriterien erfolgt, wird eine zweite Messung des Durchbiegungsverlaufes aufgezeichnet. Sobald der integrierte Durchbiegungsverlauf der ersten Messreihe von dem integrierten Durchbiegungsverlauf der zweiten Messreihen signifikant, d. h. um größere Wertebereiche als statistisch erklärbar abweicht, wird die Siliziumscheibe 1 als defekt eingestuft und quantifiziert. Die zur Qualitätsbestimmung genutzten Wertebereiche werden einem typspezifischen Parametersatz (Profil) entnommen, wobei die konkreten Werte durch vorherige Versuche empirisch bestimmt und in der rechentechnischen Komponente 5 vorher gespeichert bzw. per Bildschirmabfrage ausgewählt werden.

Zur Verbesserung der Prüfschärfe bei der Detektion von Defekten in mono- und polykristallinen Siliziumscheiben werden die Messwerte mathematisch ausgewertet und insbesondere mit den Durchbiegungsverläufen der verschiedenen Achsen verglichen. Das Ergebnis des Vergleiches zeigt Defekte wesentlich deutlicher an, als es aus Einzelmessungen ersichtlich ist. Außerdem wird bei Betrachtung mehrerer Achsen die Wahrscheinlichkeit erhöht, dass bei der mechanischen Belastung (Biegung) möglichst alle auf der Siliziumscheibe an zufällig verteilten Stellen befindlichen Defekte erfasst werden. Bei nicht eindeutigen Ergebnissen kann die Biegung über verschiedene Diagonalen und Biegerichtungen oder über verschiedene Ecken wiederholt und durch abermalige Anwendung der mathematischen Auswertung die Prüfschärfe weiter erhöht werden. Diese erfindungsgemäße Vorrichtung ist problemlos sowohl auf die speziellen Biegeeigenschaften von monokristallinen als auch von polykristallinen Siliziumscheiben einstell- und anwendbar.

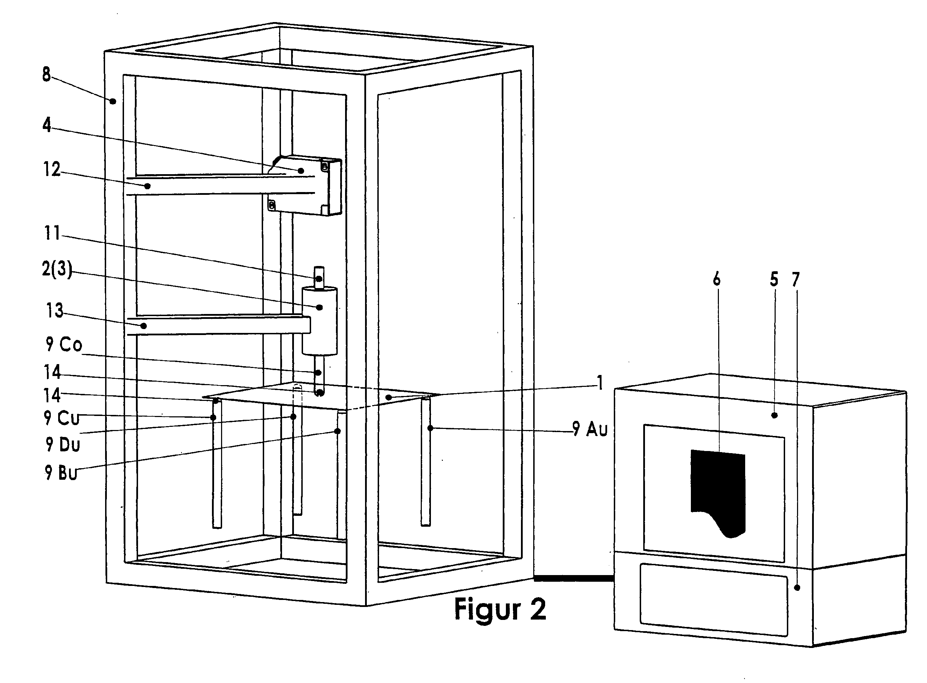

Die Figuren 2, 3 und 4 zeigen verschiedenen Ausführungsmöglichkeiten der erfindungsgemäßen Vorrichtung zur Durchführung des erfindungsgemäßen Verfahrens zur Detektion von Defekten in mono- und polykristallinen Siliziumscheiben 1. Unbeeinflusst davon, dass eine Anordnung nach Anspruch 1 eine höhere Aussagekraft besitzt, kann die Nutzung einer einzigen steuerbaren Krafterzeugungseinrichtung 2 zur Prüfung von Siliziumscheiben für bestimmte Anwendungsfälle mittels Biegebeanspruchung an sich bereits hinreichend sein, wenn sie wie aus Figur 2 ersichtlich, mittig angeordnet ist und über einen linear beweglichen Stößel 9Cₒ eine nach unten gerichtete Kraft auf die zu prüfende Siliziumscheibe 1 ausübt. Über die Ansteuerelektronik 7 wird mittels des Mikrorechners 5 und den darauf implementierten rechentechnischen Komponenten 6 eine bestimmte Kraft eingeprägt. Die Siliziumscheibe 1 biegt sich in Abhängigkeit von den tatsächlich jeweils vorliegenden Qualitätsparametern verschieden weit nach unten durch. Diese Durchbiegung und der Verlauf der Durchbiegung wird über die Wegmesseinrichtung 4 genau erfasst, indem der zurückgelegte Weg des Stößels 9Cₒ mittels der Wegänderung der Messfläche 11 erfasst aufgezeichnet und wie vorstehend bereits beschrieben ausgewertet wird. Die unteren Stößel 9Aᵤ, 9Bᵤ, 9Cᵤ, 9Dᵤ können dabei wahlweise als linear bewegliche oder auch fest angeordnete Stößel 9 ausgebildet sein. Sie sind dabei am Grundgestell 8 mit geeigneten mechanischen Mitteln befestigt (in Figur 2 nicht dargestellt).

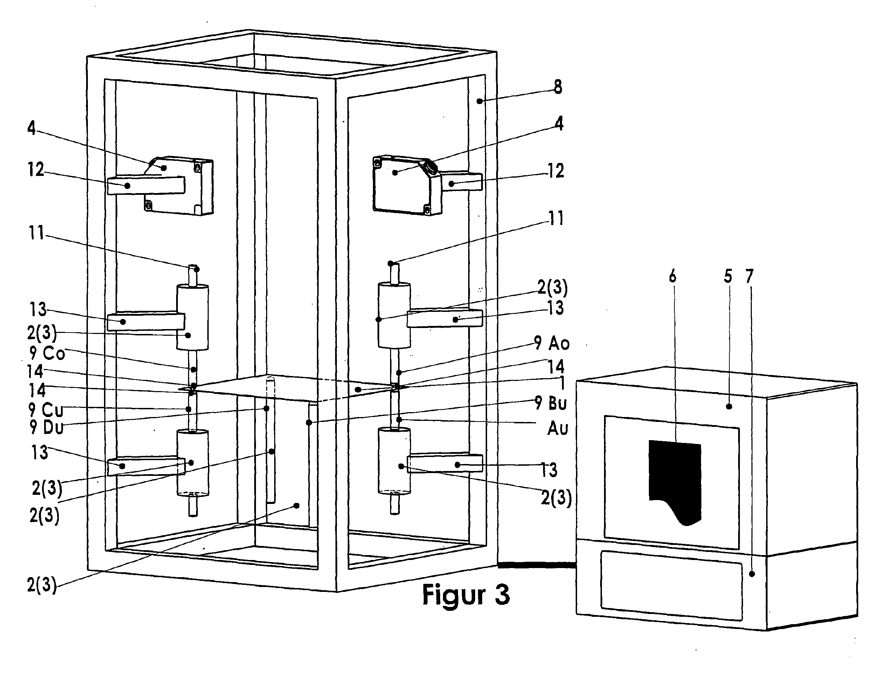

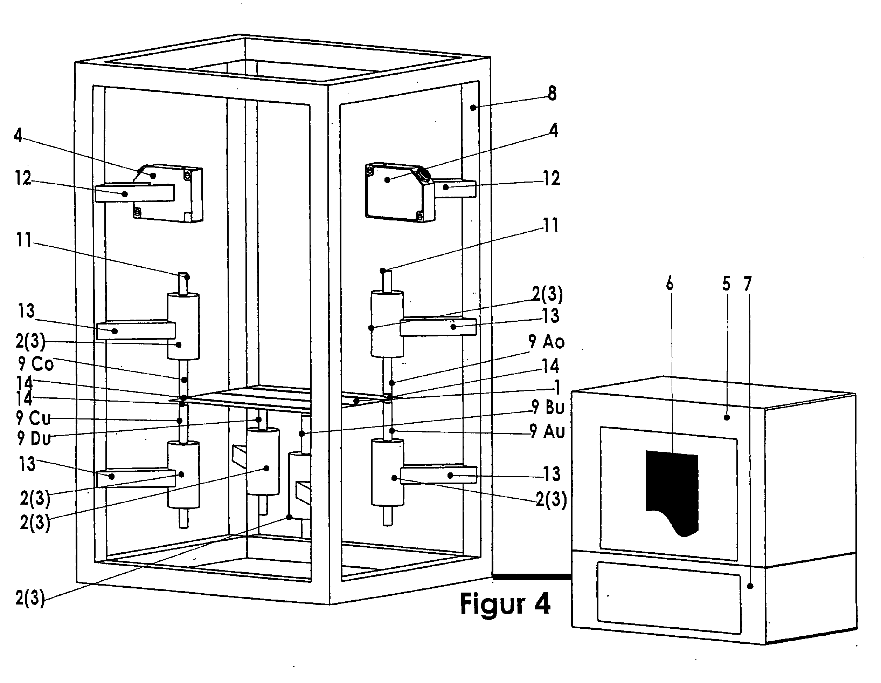

Figur 3 zeigt eine erfindungsgemäße Vorrichtung mit jeweils 2 symmetrisch gegenüberliegenden Krafterzeugungseinrichtungen 2, die diagonal verteilt jeweils in zwei Ecken der zu prüfenden Siliziumscheibe 1 angreifen. Die linear beweglichen Stößel 9 sind jeweils als ein Paar 9Aₒ/9Aᵤ und 9Cₒ/9Cᵤ, gruppiert. Zur Vierpunktauflage und damit eine Diagonale zum einfachen Twisten ausgebildet werden kann, sind des Weiteren zwei untere Stößel 9Bᵤ und 9Dᵤ in den anderen freien Ecken diagonal verteilt angeordnet, die wahlweise als fest angeordnete Stößel 9Bᵤ und 9Dᵤ, wie in Figur 3 abgebildet oder auch als linear bewegliche Stößel 9Bᵤ und 9Dᵤ wie in Figur 4 gezeigt ausgeführt sein können. Als steuerbare Krafterzeugungseinrichtungen 2 sind hier ebenfalls bevorzugt Tauchspulen eingesetzt. Die Ansteuerung und Messwertauswertung erfolgt über die im Mikrorechner 5 implementierten programmtechnischen Komponenten 6, die wie bereits vorstehend beschrieben die einzelnen Steuergrößen für die Ansteuerelektronik 7 bereitstellt.

Der eigentliche Twist-Vorgang ist in neun Schritten in Figur 5 untersetzt. Gegenüber den aus dem Stand der Technik bekannten Verfahren (z.B. Chen et. Al. und DE 10 2006 026 528 A1) werden in Figur 5 alle denkbaren Kombinationen der Durchbiegung genutzt. Das eröffnet die Möglichkeit, den Messverlauf unterschiedlicher Achsen und Durchbiegungsrichtigen miteinander vergleichen zu können. Auf diese Weise werden Asymmetrien wesentlich schneller und umfassender detektiert.

Durch das vorliegende neue erfindungsgemäße Verfahren zur Detektion von Defekten in mono- oder polykristallinen Siliziumscheiben können unter den Bedingungen der industriellen Serienfertigung auftretende werkstoff- und fertigungstechnisch bedingte Fehler wesentlich zuverlässiger und vollständiger als bisher technisch einfach realisierbar mittels mechanischer einfach handhabbaren Biegebeanspruchungen erkannt und detektiert werden. Der besondere Vorteil der erfindungsgemäßen Lösung besteht darin, dass zur Prüfung auf mechanische Defekte mechanische Mittel angewandt werden. Aus der wesensverwandten Übereinstimmung des Prüfansatzes mit den gesuchten Effekten erklärt sich die außergewöhnlich hohe Selektionsgüte. Die Früherkennung derartiger Fehler im Produktionsprozess ist für die Wirtschaftlichkeit der Fertigung und späteren Zuverlässigkeit, respektiv der Vermeidung von Reklamationsfällen, der produzierten Solarmodule oder anderer Halbleiterprodukte von entscheidender Bedeutung.

Die Erfindung ist in erster Linie in der Serienfertigung bei der Herstellung von plattenförmigen Solarmodulen zur Qualitätsprüfung und Selektion jeder einzelnen mono-oder polykristallinen Siliziumscheibe wie z.B. einer Solarzelle anwendbar.

### Bezugszeichenliste

- 1: Siliziumscheibe, insbesondere Solarzelle oder Siliziumwafer
- 2: steuerbare Krafterzeugungseinrichtung
- 3: Halterung
- 4: Wegmesseinrichtung
- 5: rechentechnischen Komponenten, d.h. eine oder mehrere speicherprogrammierbare Steuerungen (SPS) oder Rechner
- 6: programmtechnische Komponenten
- 7: Ansteuerelektronik
- 8: Grundgestell
- 9: Stößel der steuerbaren Krafterzeugungseinrichtung
- 9Aᵤ 9Bᵤ 9Cᵤ 9Dᵤ: untere Stößel eines Stößelpaares
- 9Aₒ 9Bₒ 9Cₒ 9Dₒ: obere Stößel eines Stößelpaares
- 10: Widerlager
- 11: Messfläche
- 12: Befestigungsstege der Wegmesseinrichtung
- 13: Befestigungsarme der Krafterzeugungseinrichtung
- 14: Stößelkopf

## Patentansprüche

1. Vorrichtung zur Detektion von Defekten in mono- und polykristallinen Siliziumscheiben (1), insbesondere in Solarzellen oder Siliziumwafern,
unter Nutzung mindestens einer steuerbaren Krafterzeugungseinrichtung (2), die über eine Ansteuerelektronik (7) mit rechentechnischen Komponenten (5), in die programmtechnische Komponenten (6) implementiert sind, verbunden ist
und Auflage der Siliziumscheibe (1) auf mehrere Halter (3),
zur Biegebeanspruchung,
**dadurch gekennzeichnet,**
**dass** in einem Grundgestell (8) eine oder mehrere Krafterzeugungseinrichtungen (2) mit je einem linear beweglichen Stößel (9) und einen oder mehreren Haltern (3) mit je einem Widerlager (10) und/oder mindestens ein Stößelpaar (9Aᵤ, 9Aₒ) angeordnet sind,
die Siliziumscheibe (1) zwischen mindestens einem linear beweglichen Stößel (9) und mindestens drei Widerlagern (10)
und/oder zwischen mindestens einem Stößelpaar (9Aᵤ, 9Aₒ),
bestehend aus einem unteren Stößel (9Aᵤ) einer unter der Siliziumscheibe (1) angeordneten Krafterzeugungseinrichtung (2) auf der einen Seite
und einem Stößel (9Aₒ) einer über der Siliziumscheibe (1) entgegengesetzt angeordneten Krafterzeugungseinrichtung (2) gehalten wird,
wobei an mindestens einem Stößel (9) oder an einem Stößel (9) des Stößelpaares (9Aᵤ, 9Aₒ) eine Messfläche (11) angeordnet ist
und am Grundgestell (8) eine oder mehrere auf die Messfläche (11) gerichtete Wegmesseinrichtungen (4) so befestigt sind, dass die Durchbiegung der Siliziumscheibe (1) messtechnisch erfassbar und auswertbar ist.

2. Verfahren zur Detektion von Defekten in mono- und polykristallinen Siliziumscheiben (1), insbesondere Solarzellen oder Siliziumwafer, unter Auswertung von Messdaten aus Biegebeanspruchungen bei Nutzung mindestes einer steuerbaren Krafterzeugungseinrichtung (2) zur Biegebeanspruchung,
**dadurch gekennzeichnet,**
**dass** eine zwischen einem Stößel (9) und festen und/oder beweglichen Widerlagern (10) und/oder einem Stößelpaar (9Aᵤ und 9Aₒ) und Haltern (3) gehaltene Siliziumscheibe (1), durch unterschiedliche Ansteuerung einer oder mehrerer Krafterzeugungseinrichtungen (2) mechanisch uni- und/oder bidirektional verformt wird,
wobei die Ansteuerelektronik (7) der Krafterzeugungseinrichtungen (2) diese unter Nutzung von rechentechnischen Komponenten (5) mittels implementierter programmtechnischer Komponenten (6) steuert,
die Steuergröße der Ansteuerelektronik (7) in Relation zu den über die Wegmesseinrichtung (4) ermittelten Durchbiegungsverlauf aufzeichnet wird,
während programmtechnische Komponenten (6) eine realisierte real-time Auswertung aufzeichnen und die Abweichungen zwischen einer ersten Messung und mindestens einer weiteren Messung und/oder einem signifikanten Durchbiegungsverlauf als Abbruchkriterium überwacht, ausgewertet und detektiert werden.

3. Vorrichtung zur Detektion von Defekten nach Anspruch 1 oder 3,
**dadurch gekennzeichnet,**
**dass** als steuerbare Krafterzeugungseinrichtung (2) eine Tauchspule oder ein Voice-Coil-Aktor mit beweglichem Stößel (9) zur Erzeugung einer mittels Strom- oder Spannungseinprägung steuerbaren Kraft angeordnet sind.

4. Verfahren zur Detektion von Defekten nach Anspruch 2,
**dadurch gekennzeichnet,**
**dass** die Krafterzeugungseinrichtungen (2) von einer Stellgröße gesteuert werden, welche mittels rechentechnischen Komponenten (5), programmtechnischer Komponenten (6) und der Ansteuerelektronik (7) zur Kompensation sekundärer Effekte (Masseträgheit, Induktion) forciert erfolgt.

5. Verfahren zur Detektion von Defekten nach Anspruch 2,
**dadurch gekennzeichnet,**
**dass** eine Selbstkalibration der Vorrichtung erfolgt, indem durch die steuerbare Krafterzeugungseinrichtung (2) das Kräftegleichgewicht zwischen der Erdanziehung eines ersten, Stößels (9Aₒ) und der Steuergröße bei Einsatz einer Wegänderung an der Messanordnung (4) als ein erster Eichpunkt bestimmbar ist.

6. Verfahren zur Detektion von Defekten nach Anspruch 2,
**dadurch gekennzeichnet,**
**dass** eine Selbstkalibration der Vorrichtung erfolgt, indem bei einer Anordnung mit zwei gegenüberliegenden steuerbaren Krafterzeugungseinrichtungen (2) das Kräftegleichgewicht zwischen der Erdanziehung zweier aufeinanderliegender sich gegenüber stehender Stößel (9Aᵤ und 9Aₒ) und der Steuergröße bei Einsatz einer Wegänderung an der Messanordnung (4) als ein zweiten Eichpunkt bestimmbar ist.

7. Verfahren zur Detektion von Defekten nach Anspruch 2,
**dadurch gekennzeichnet,**
**dass** eine Selbstkalibration der Vorrichtung erfolgt, indem die oberen Stößel (9Aₒ, 9Bₒ, 9Cₒ, 9Dₒ) bis zum oberen Anschlag der steuerbaren Krafterzeugungseinrichtungen (2) verfahren werden und diese Punkte als dritte Werte der jeweiligen Stößel zum Eichen der Endpunkte der jeweiligen Wegskala und zur Verifizierung der anderen Eichpunkte benutzt werden.

8. Verfahren zur Detektion von Defekten nach Anspruch 2,
**dadurch gekennzeichnet,**
**dass** das Gewicht der Siliziumscheibe (1) ermittelt wird, indem die unteren beweglichen Stößel (9Aᵤ und ggf. 9Bᵤ, 9Cᵤ, 9Dᵤ) der steuerbaren Krafterzeugungseinrichtungen (2) einer kontinuierlichen Zunahme der Kraft mit aufgelegter Siliziumscheibe (1) ausgesetzt werden, wobei mit Überschreiten der Erdanziehung von Stößeln inklusive Siliziumscheibe (1) eine Wegänderung einsetzt, welche in diesem Moment als Differenz zum ersten Eichpunkt das Gewicht repräsentiert,
und in Abhängigkeit vom ermittelten Gewicht unterschiedliche Messprofile d.h. Parametersätze und/oder Referenzkurven gewählt werden, indem die rechentechnischen Komponenten (5) in Verbindung mit implementierten programmtechnischen Komponenten (6) die optimale Ansteuerung der Krafterzeugungseinrichtung (2) wählt.

9. Verfahren zur Detektion von Defekten nach Anspruch 1,
**dadurch gekennzeichnet,**
**dass** die Dicke der Siliziumscheibe (1) ermittelt wird, indem in einer ersten Phase alle Stößel (9) ohne Einlage einer Siliziumscheibe (1) herabgelassen werden und dabei ein unterer Punkt bestimmt wird und in einer zweiten Phase ein analoger zweiter Punkt bei eingelegter Siliziumscheibe (1) bestimmt wird, wobei die Differenz von ersten zu zweitem Punkt die Dicke repräsentiert
und in Abhängigkeit von der ermittelten Dicke unterschiedliche Messprofile, d.h. Parametersätze und/oder Referenzkurven gewählt werden, indem die rechentechnischen Komponenten (5) in Verbindung mit implementierten programmtechnischen Komponenten (6) die optimale Ansteuerung der Krafterzeugungseinrichtung (2) wählt.

10. Verfahren zur Detektion von Defekten nach Anspruch 2,
**dadurch gekennzeichnet,**
**dass** zwei gegenüberliegende steuerbare Krafterzeugungseinrichtungen (2) eines Stößelpaares mit ihren unteren und oberen Stößeln (9Aᵤ und 9Aₒ) zur Halterung des Solarelementes (1) genutzt werden, indem zwischen den zwei gegenüber stehenden Stößeln in jeder Position der Stößel (9Aᵤ und 9Aₒ) eine definierte Haltekraft mittels der Steuerelektronik (7) eingeprägt wird.

11. Verfahren zur Detektion von Defekten nach Anspruch 2,
**dadurch gekennzeichnet,**
**dass** die real-time-Auswertung der Biegeverläufe eine sukzessive Integration der Messwerte beinhaltet und ein Abbruch weiterer Kraftanwendung erfolgt, sobald die jeweils aus dem Integral prognostizierte Vorhersage d.h. die Extrapolation des nächsten Messpunktes vom tatsächlich gemessenen Wert signifikant abweicht.

12. Verfahren zur Detektion von Defekten nach Anspruch 2,
**dadurch gekennzeichnet,**
**dass** Abweichungen bei Vergleich des integrierten Biegeverlaufes einer ersten Messreihe mit dem integrierten Biegeverlauf einer oder mehrerer weiterer Messreihen ermittelt und bei signifikanten Abweichungen der Biegeverläufe ein mechanischer Defekt unterstellt wird,
wobei die Größe der Abweichung eine Quantifizierung der mechanischen Schädigung ermöglicht.

13. Verfahren zur Detektion von Defekten nach Anspruch 2,
**dadurch gekennzeichnet,**
**dass** zur Detektion von Defekten in mono- und polykristallinen Siliziumscheiben (1) Messwerte verschiedener Achsen und Durchbiegungsrichtungen mathematisch verglichen werden und bei signifikanten Abweichungen der Biegeverläufe verschiedener Achsen und
Durchbiegungsrichtungen ein mechanischer Defekt unterstellt wird und die Größe der Abweichung eine Quantifizierung der mechanischen Schädigung ermöglicht.
